# EUROPEAN PATENT APPLICATION

(11) **EP 4 729 148 A1**
(43) Date of publication of application: **22.04.2026**
(21) Application number: 24207258.5
(22) Date of filing: 17.10.2024
(51) Int. Cl.: B01D 29/23, B01D 35/143, D06F 39/10

(54) **FILTER ASSEMBLY AND WASHING MACHINE INCLUDING THE SAME**

(30) Priority: 15.10.2024 KR 20240140248
(71) Applicant: Microfilter Co., Ltd., Chungcheongbuk-do 27856 (KR)
(72) Inventor: Joung, Whi Dong, 06544 Seou (KR); Park, Jin Geun, 12553 Gyeonggi-do (KR); Kim, Dong Hyun, 32541 Chungcheongnam-do (KR); Lee, Kyong Su, 18396 Gyeonggi-do (KR); Lee, Hyung Gue, 28791 Chungcheongbuk-do (KR)
(74) Representative: RGTH

(57) **Abstract**

According to an embodiment of the present invention, a filter assembly and a washing machine including the same are provided, wherein the filter assembly comprises: a filter housing having a water inlet part through which washing water flows in, and a discharge part through which the washing water that flows in is filtered and discharged; and a filter part disposed inside the housing and filtering the washing water that flows in through the water inlet part.

## Description

### Technical field

The present invention relates to a filter assembly and a washing machine including the same.

### Background of the invention

In general, a laundry treatment apparatus is a common name for various devices that treat laundry by applying physical and chemical actions to the laundry, such as a washing machine that removes contaminants from clothes, bedding, and the like (hereinafter, referred to as "laundry") by using water, detergent, and mechanical actions, a dryer that dries wet laundry by using dry hot air heated by a heater, and mechanical actions, a washing machine that also performs both a washing function and a drying function, and a refresher that prevents allergies caused by the laundry by spraying heated steam onto the laundry.

The washing machine may be classified into a top load type washing machine in which a laundry loading hole for loading and unloading laundry is formed at an upper surface of a cabinet and washing is performed by a rotating water current generated when a washing tub rotates, and a drum type washing machine in which a laundry loading hole is formed at a front surface of the cabinet and washing is performed by a drop of laundry when a drum rotates.

A conventional top load type washing machine includes a cabinet which forms an outer appearance and has an opened upper surface, a base which is installed on the lower side of the cabinet, an outer tub which is installed inside the cabinet and stores water, a washing tub which is arranged inside the outer tub and washes laundry, a driving device which is arranged on the lower side of the washing tub and includes a motor rotating the washing tub, a water supply device which supplies water into the outer tub, and a drain device which drains water in the outer tub.

Meanwhile, microplastics are defined as small plastic pieces of less than 5 mm, and there is a problem that microplastics are affecting the environment and health. The amount of microsynthetic microfiber spreads in wastewater and the environment, increasing environmental pollution. In particular, it has been observed that the synthetic microfiber is produced/discharged in the washing process of synthetic fibers that are not biodegradable, resulting in water pollution caused by microplastics.

As described above, various fine dust (fine dust, plastic, laundry dust, fiber dust, yellow dust, heavy metals, radioactive substances, fine dust, other harmful bacteria, etc.) discharged from laundry such as clothing remains and is discharged to the outside as it is, thereby contaminating the environment. There is a concern that it may accumulate in the human body due to environmental pollution, causing diseases.

### Prior art document

### Patent document

(Patent Document 0001) Korean Patent No. 10-2179793

### Detailed Description

### Problems to be solved of the invention

An object of the present invention is to provide a filter assembly capable of easily removing residues such as fine plastic contained in washing drainage generated in a washing process, by providing a filtering device mounted on a drainage portion of a laundry home appliance, and a washing machine including the same.

The technical problems to be solved by the present invention are not limited to the technical problems mentioned above, and other technical problems that are not mentioned can be clearly understood by those skilled in the art to which the present invention pertains from the following description.

### Means for solving problems

According to an embodiment of the present invention, the filter assembly may include a filter housing having a water inlet part through which washing water flows in, and a discharge part through which the washing water that flows in is filtered and discharged; and a filter part disposed inside the housing and filtering the washing water that flows in through the water inlet part.

According to an embodiment of the present invention, the filter part may be provided to be detachable from the housing.

According to an embodiment of the present invention, one of the water inlet part and the discharge part may be provided with a filter net that prevents inflow of floating substances having a predetermined size or more.

According to an embodiment of the present invention, the filter part may include a filtering member configured to filter the washing water; and a filtering frame configured to fix the filtering member.

According to an embodiment of the present invention, the filter housing may include a body part in which the filter part is accommodated; and a stopper detachably provided on the body part.

According to an embodiment of the present invention, the filter part may include a filter fixing part provided on one side of the filter part and to which the filter part is fixedly coupled inside the filter housing.

According to an embodiment of the present invention, the stopper may be provided with a grip part to facilitate a user's gripping.

According to an embodiment of the present invention, the filter housing may include a housing case coupled to the filter housing and provided with a fixing groove to fix the filter assembly at a predetermined position by a fastening means.

A washing machine according to an embodiment of the present invention may include: a washing machine housing forming an exterior of the washing machine; a washing tub disposed inside the washing machine housing and through which washing water supplied from the outside flows in and which is rotatably formed; and a filter assembly disposed for the washing water discharged from the washing tub to be in fluid communication with a discharge pipe, wherein the filter assembly may include: a filter housing having a water inlet part in communication with the discharge pipe so that the washing water flows in, and a discharge part through which the washing water that flows in is filtered and discharged; and a filter part disposed inside the housing, and filtering the washing water that flows in through the water inlet part.

### Effects of the invention

According to an embodiment of the present invention, the filter assembly and the washing machine including the same wherein a filtering device is mounted on the drainage part according to the present invention easily remove residues such as fine plastic.

Brief description of drawings
FIG. 1 is a drawing of a washing machine including a filter assembly according to an embodiment of the present invention,
FIG. 2 is a perspective view of a filter assembly according to an embodiment of the present invention,
FIGS. 3 and 4 are drawings of a filter housing according to an embodiment of the present invention,
FIGS. 4 and 5 are perspective views of a filter part according to an embodiment of the present invention,
FIG. 6 is a drawing of a filter net according to an embodiment of the present invention,
FIG. 7 is a cross-sectional view of a filter assembly according to an embodiment of the present invention, and
FIG. 8 is an exploded perspective view of a filter assembly according to an embodiment of the present invention.

### Specific contents for practicing the invention

Hereinafter, an embodiment of a filter assembly and a washing machine including the same according to the present invention will be described in detail with reference to the accompanying drawings.

It should be noted that, in adding reference numerals to components of each drawing, the same components are denoted by the same reference numerals as possible even though they are illustrated in different drawings. In addition, in describing the embodiment of the present invention, when it is determined that a detailed description of a related known configuration or function interferes with the understanding of the embodiment of the present invention, the detailed description thereof will be omitted.

In describing the components of the embodiments of the present invention, terms such as first, second, A, B, (a), (b), and the like may be used. Such terms are only for distinguishing the constituent elements from other constituent elements, and the essence, order, or sequence of the corresponding constituent elements is not limited by the terms. Unless otherwise defined, all terms used herein, including technical or scientific terms, have the same meaning as commonly understood by those skilled in the art. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The water inlet part and the discharge part described below may refer to a portion, that is, a hole, in which the fluid flowing in the filter assembly is initially introduced and finally discharged.

As described above, in the case of the washing machine, fine plastic or the like discharged from the fiber material when used for a long time may be discharged. Accordingly, the present invention provides a filter to the washing water discharge part to discharge washing water from which the fine plastic or the like included in the washing water is filtered and removed.

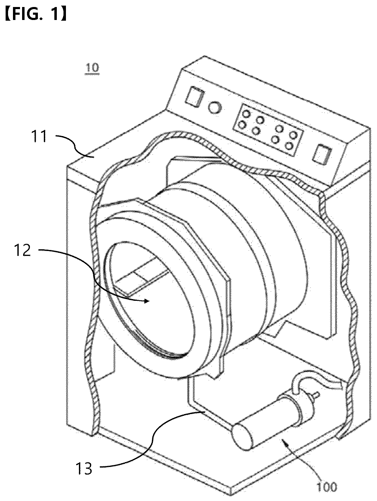

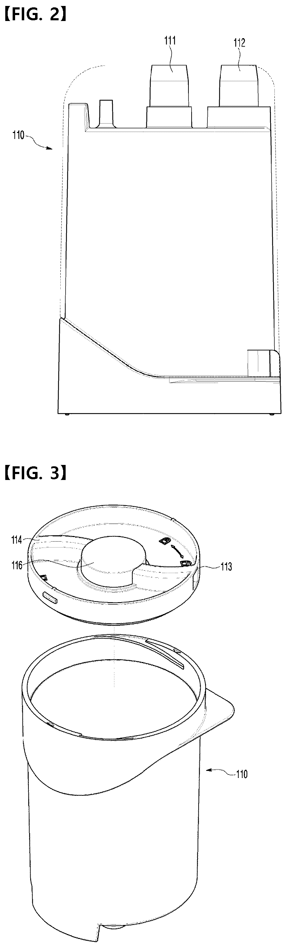

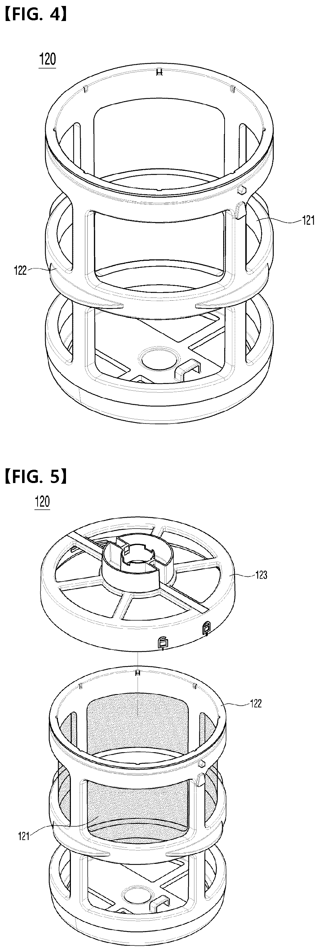

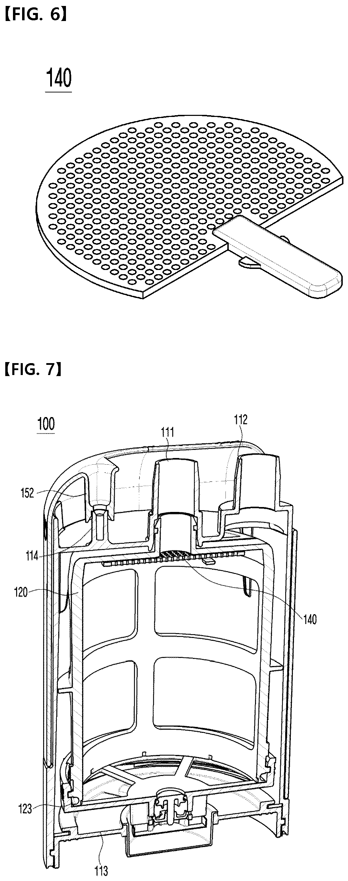

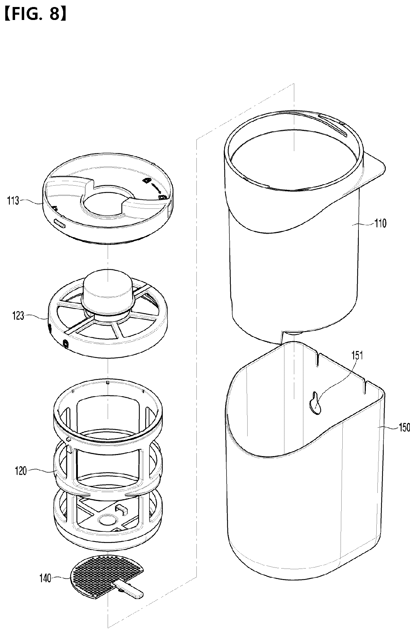

FIG. 1 is a drawing of a washing machine including a filter assembly according to an embodiment of the present invention, FIG. 2 is a perspective view of a filter assembly according to an embodiment of the present invention, FIGS. 3 and 4 are drawings of a filter housing according to an embodiment of the present invention, FIGS. 4 and 5 are perspective views of a filter part according to an embodiment of the present invention, FIG. 6 is a drawing of a filter net according to an embodiment of the present invention, FIG. 7 is a cross-sectional view of a filter assembly according to an embodiment of the present invention, and FIG. 8 is an exploded perspective view of a filter assembly according to an embodiment of the present invention.

Hereinafter, embodiments of the present invention will be described in detail with reference to the accompanying drawings.

The filter assembly 100 according to FIGS. 1 to 15 may include a filter housing 110 having a water inlet part 111 through which washing water flows in and a discharge part112 through which the washing water that flows in is filtered and discharged, and a filter part 120 disposed inside the filter housing 110 and filtering the washing water that flows in through the water inlet part 111.

The filter assembly 100 may be disposed in the washing machine 10, and may filter and discharge foreign substances, fine plastic, and the like after washing water is introduced from the outside. The filter assembly 100 may be formed on a path through which the washing water discharged from the washing tub 12 of the washing machine 01 flows, that is, a path of the discharge pipe 13. The discharge pipe 13 is in fluid communication with the washing tub 12, and the washing water is discharged from the washing tub 12 and passes through the discharge pipe 13 and the filter assembly 100 according to the present invention provided on the discharge pipe 13 to filter and remove fine fibers, fine plastics, and the like, which are generated in the washing of clothes and the like and may be included in the washing water, and the washing water from which the fine fibers, fine plastics, and the like are removed may be discharged to the outside through the filter assembly 100.

The filter assembly 100 includes a filter housing 110 forming an outer shape, and the filter housing 110 may be formed in a cylindrical shape having an inner space formed therein so that washing water is introduced and filtered, but is not limited thereto. The filter housing 110 is provided with a water inlet part 111 through which the washing water may be introduced, and the water inlet part is formed in a hole shape to allow the washing water to be easily introduced. The filter housing 110 may be provided with a discharge part 112 so that the washing water introduced from the water inlet part 111 and filtered is discharged, and may be formed in a hole shape so that the washing water is easily discharged.

The filter housing 110 may be provided with a body part in which the filter part 120 is accommodated and a stopper 113 provided to be detachable from the body part.

The body part may be provided in a cylindrical shape with one open side in which an inner space is formed to accommodate the filter part 120, and the water inlet part 111 and the water discharge part 112 may be provided on the other side.

The filter housing 110 may be provided with a stopper 113. The stopper 113 may be provided to be detachable from the filter housing 110, and the stopper 113 may be provided to facilitate replacement of the filter part 120 and removal of foreign substances, etc. according to detachment of the stopper 113. A grip part 114 may be provided on the bottom surface of the stopper 113. The user may easily rotate the stopper 113 in a predetermined direction by the grip part 114 to mount or detach the stopper 113 from the filter housing 110.

A filter net 140 may be provided at one of the water inlet part 111 and the discharge part 112 of the filter housing 110 to prevent inflow of floating matter having a predetermined size or more. Preferably, the filter net 140 may be provided in the water inlet part 111, and the filter net 140 may be provided in the water inlet part 111, thereby preventing floating matter having a predetermined size or more from flowing into the filter assembly 100.

The filter part 120 may be accommodated in the accommodation space of the filter housing 110. The filter part 120 may be provided in a cylindrical shape and disposed to be spaced apart from the inner circumferential surface of the filter housing 110 to have a predetermined interval, and an internal chamber space may be formed to accommodate the washing water introduced through the water inlet part 111 of the filter housing 110. The filter part 120 may filter fine plastic and fine fibers contained in the washing water introduced through the water inlet part 111.

More specifically, the filter part 120 may be configured to include a filtering member 121 for filtering washing water and a filtering frame 122 for fixing the filtering member 121 and forming a frame of the filter part 120.

The filtering member 121 may filter foreign substances contained in washing water, fine plastic discharged from fibers, and the like. Preferably, the filtering member 121 may be capable of filtering fine particles having a fine dimension of less than 5 mm. In one example, the filtering member may be provided in the shape of a mesh net or a nonwoven fabric made of a sheet material of fabric. The filtering member is not particularly limited as long as it has a shape or a material in which fine fiber plastic filtered as washing water can be collected. For example, the filtering member may be provided with at least one of a carbon block, a nano-electrostatic sheet, and a UF sheet. The carbon block filter may include activated carbon, a binder, and an additive. The nano-electrostatic sheet may include glass fiber, cellulose, alumina fiber, polypropylene (PP), and polyethylene (PE), and the UF sheet may include polysulfone (PSF), polyethersulfone (PES), polyvinylidene difluoride (PVDF), polypropylene (PP), and polyethylene (PE).

The filter part 120 may be formed in a structure in which it is opened on the upper surface thereof, and a filter fixing part 123 may form the upper surface of the filter part 120 at the opened portion of the filter part 120 and may be detachably or fixedly coupled to the filter part 120. More specifically, the filter fixing part 123 may be provided to be mounted on an opened portion of the filter part 120 positioned on the side surface on which the stopper 113 of the filter housing 110 is provided, and the filter part 120 may be fixedly coupled to the inside of the filter housing 110 by providing the filter fixing part 123.

A management part may be provided in the filter fixing part to determine the replacement cycle of the filter part. A management part is provided and the filter part may be replaced by determining the replacement cycle of the filter part by the management part.

The filter assembly 100 may be provided with a housing case 150 coupled to the filter housing 110 and provided with a fixing groove 151 to fix the filter assembly 100 at a predetermined position by a fastening means. The housing case 150 is provided so that the filter assembly 100 may be positioned at a predetermined position by the fastening means.

The filter housing 110 may be provided with a case fastening part 114 to be fastened to one side of the housing case 150, and the housing case 150 may be provided with a housing fastening part 152 to be fastened to the case fastening part 114. The case fastening part 114 may be provided to protrude from one side of the filter housing in one direction, and the housing fastening part 152 may be inserted and fastened to the case fastening part 114 formed to protrude.

FIG. 1 is a drawing of a washing machine including a filter assembly according to an embodiment of the present invention.

A washing machine 10 including a filter assembly 100 according to FIG. 1 may include a washing machine housing 11 forming an outer shape, a washing tub 12 disposed inside the washing machine housing 11 and into which washing water supplied from the outside flows and formed to be rotatable, a discharge pipe 13 in fluid communicating with the washing tub 12 and through which the washing water discharged from the washing tub 12 flows, and a filter assembly 100 disposed on the discharge pipe 13. Since the filter assembly 100 is provided on the discharge pipe 13 through which the washing water is discharged from the washing tub 12, fine fibers and fine plastic contained in the washing water may be filtered and discharged.

In the process of filtering by the filter assembly 100 according to the present invention, washing water is supplied to the washing tub 11 of the washing machine 10. The introduced washing water may be discharged to the outside of the washing machine through a pipe or a hose after washing of clothes or the like is completed. The washing water discharged from the washing tub 12 may be introduced into the filter assembly 100 according to the present invention provided on the discharge pipe 13 along the discharge pipe 13, and fine fibers and fine plastic that may be contained in the washing water may be filtered so that the washing water is discharged to the outside.

The above description of the present invention is for illustration, and those of ordinary skill in the art to which the present invention pertains can understand that the present invention can be easily modified into other specific forms without changing the technical idea or essential features of the present invention. Therefore, it should be understood that the embodiments described above are exemplary and not restrictive in all aspects. For example, each element described as a single element may be distributed and implemented, and similarly, elements described as being distributed may also be implemented in a combined form.

The scope of the present invention is indicated by Claims to be described later, and it should be interpreted that all changes or modified forms derived from the meaning and scope of Claims and the equivalent concept thereof are included in the scope of the present invention.

### Description of Number in Drawing

10: Washing machine
11: Washing machine housing
12: Washing tub
13: Discharge pipe
100: Filter assembly
110: Filter housing
111: Water inlet part
112: Discharge part
113: Stopper
114: Grip part
120: Filter part
121: Filtering member
122: Filtering frame
123: Filter fixing part
140: Filter net
150: Housing case
151: Fixing groove

## Claims

1. A filter assembly comprising:
a filter housing including a water inlet part through which washing water flows in and a discharge part through which the washing water that flows in is filtered and discharged; and
a filter part disposed inside the housing and filtering the washing water that flows in through the water inlet part.

2. The filter assembly of claim 1, wherein the filter part is configured to be detachable from the housing.

3. The filter assembly of claim 1, wherein one of the water inlet part and the discharge part is provided with a filter net configured to prevent inflow of floating substances having a predetermined size or more.

4. The filter assembly of claim 1, wherein the filter part comprises: a filtering member configured to filter the washing water; and a filtering frame configured to fix the filtering member.

5. The filter assembly of claim 1, wherein the filter housing comprises: a body part in which the filter part is accommodated; and a stopper detachably provided on the body part.

6. The filter assembly of claim 1, wherein the filter part comprises a filter fixing part provided on one side of the filter part and to which the filter part is fixedly coupled inside the filter housing.

7. The filter assembly of claim 5, wherein the stopper comprises a grip part protruding to facilitate gripping.

8. The filter assembly of claim 1, wherein the filter housing comprises a housing case coupled to the filter housing and provided with a fixing groove to fix the filter assembly at a predetermined position by a fastening means.

9. A washing machine comprising:
a washing machine housing forming an exterior of the washing machine;
a washing tub disposed inside the washing machine housing and washing water supplied from the outside flows in and which is rotatably formed; and
a filter assembly disposed for the washing water discharged from the washing tub to be in fluid communication with a discharge pipe,
wherein the filter assembly comprises:
a filter housing having a water inlet part in communication with the discharge pipe so that the washing water flows in, and a discharge part through which the washing water that flows in is filtered and discharged; and
a filter part disposed inside the housing, and filtering the washing water that flows in through the water inlet part.
